Europäisches Patentamt

European Patent Office

Office européen des brevets

(11) Publication number: **0 179 129**
**B1**

(12) **EUROPEAN PATENT SPECIFICATION**

(45) Date of publication of patent specification: **21.03.90**

(51) Int. Cl.⁵: **G 01 N 27/30**

(21) Application number: **85902260.0**

(22) Date of filing: **09.04.85**

(86) International application number:
**PCT/US85/00642**

(87) International publication number:
**WO 85/04719 24.10.85 Gazette 85/23**

(54) **SELF-CALIBRATING SINGLE-USE SENSING DEVICE FOR CLINICAL CHEMISTRY ANALYZER.**

(30) Priority: **11.04.84 US 598868**

(43) Date of publication of application:
**30.04.86 Bulletin 86/18**

(45) Publication of the grant of the patent:
**21.03.90 Bulletin 90/12**

(84) Designated Contracting States:
**DE FR GB**

(56) References cited:
**EP-A-0 012 031**
**US-A-3 556 950**
**US-A-3 698 238**
**US-A-3 884 640**
**US-A-3 917 524**
**US-A-4 184 936**
**US-A-4 214 968**
**US-A-4 233 029**
**US-A-4 271 119**
**US-A-4 273 639**
**US-A-4 283 262**
**US-A-4 336 091**
**US-A-4 366 040**

(73) Proprietor: **Arden Medical Systems, Inc.**
**3771 Lexington Avenue North,**
**Arden Hills, MN 55126 (US)**

(72) Inventor: **BAKER, Richard, W.**
**4851 Salish Circle**
**Anoka, MN 55303 (US)**
Inventor: **FUNK, Roger, Lee**
**1525 - 20th Avenue Northwest**
**Cedar, MN 55011 (US)**

(74) Representative: **Strehl, Schübel-Hopf, Groening**
**Maximilianstrasse 54 Postfach 22 14 55**
**D-8000 München 22 (DE)**

Courier Press, Leamington Spa, England.

## Description

Background of the Invention
1. Field of the Invention.

The present invention relates to medical devices. In particular, the present invention relates to clinical chemistry analyzers which are used for the measurement of medically significant substances in body fluids.

2. Description of the Prior Art.

The increasing sophistication in the treatment of disease in recent years has led to the need for diagnostic instrumentation that will effectively gather accurate information on the patient before treatment begins. A critical component of this information gathering involves blood analysis for determining the presence and concentration of particular chemicals in the blood.

The methods by which chemical data are gathered for accurate medical diagnosis constitute a branch of medical science called clinical chemistry. Currently there are three major methods which are commonly used to measure the level of chemicals in blood or other body fluids. These methods are: optical, flame photometry, and ion selective electrodes.

The optical methods (which are sometimes referred to as spectrophotometric methods) operate on the principle that when specific reagents are mixed with a sample of the body fluid, a reaction takes place which allows the measurement of the chemical of interest by measuring the change in wavelength of light transmitted by the sample. The clinical chemistry analyzer systems which use an optical method have typically operated by either mixing the sample with a prepackaged amount of reagents or by allowing the mixing of the sample with the reagents through various tubing and mixing operations.

In flame photometry methods, the sample is consumed in a flame. The specific light produced by a given chemical of interest during the combustion process is used to determine the level of that chemical in the body fluid.

Ion selective electrode measurement methods use electrodes having membranes that selectively interact with chemical ions of interest. These methods involve a potentiometric, amperometric or other electrical measurement which is a function of the concentration of the ion of interest in the sample.

In the past, the clinical chemistry analyzers using optical, flame photometry or ion selective electrode methods have tended to be large in size, expensive, and complex to operate. Analyzers using optical techniques or ion selective electrodes have been expensive to acquire due to the complexity of the mechanical systems and the nature of the exacting measurement required. They have also needed trained operators to continually monitor and evaluate the measurements, have required exhaustive and frequent maintenance, and have required frequent calibration.

Analyzers using flame photometry have also required trained operators and an extremely high amount of maintenance. In addition, flame photometers have required a source of propane and an open flame, which is undesireable for safety reasons.

In general, only large medical institutions have been able to afford the purchase of clinical chemistry analyzers. Smaller hospitals, clinics and physician group practices usually have had to employ centralized hospital laboratories or commercial laboratories to do their chemical tests. These laboratories have grown substantially in the last decade with the increased emphasis on measurement of medically significant substances in the blood and other body fluids as a part of the physician's diagnosis prior to treatment.

In the past, basic blood chemistry tests have often been very time consuming. When a physician has required a basic blood test, a blood sample has been taken and sent to a laboratory for analysis. The results of the test in nonemergency cases has taken from one hour to several days. In the meantime, the patient may have left the clinic and then had to return later or be telephoned to consult with the physician on the results of the test. This procedure has been inconvenient and medically inefficient for both the physician and the patient.

There is a strong need for clinical chemistry instrumentation that can be readily available to all physicians who desire to conduct selected basic chemistry tests without delay and at a reasonable cost. This need extends to individual doctor's offices, physician group practices, hospitals for bedside applications, operating and emergency rooms, cardiac and intensive care units, nursing homes, ambulances and emergency vehicles, and in centralized laboratories for immediate ("stat") use.

This need for improved clinical chemistry instrumentation, however, requires an analyzer which is less expensive to acquire, is easier to operate, requires less maintenance, eliminates the need for an open flame, eliminates the need for constant manual calibration and verification of measurements, reduces drift effects to a negligible level, eliminates need for handling of calibrated reagents, is portable enough to allow its use where required, and uses whole blood so that the time consuming step of centrifuging blood samples is eliminated, and requires very small volumes of blood for testing. The prior art clinical chemistry analyzers, however, have been unable to meet all of these requirements.

Various devices are known in the art. US-A-3,844,640 discloses an apparatus for analyzing a fluid, specifically blood, which comprises a vessel containing a number of sensors and a flow channel for passing the specimen fluid, a calibration fluid and a rinsing fluid with intermediate quantities of air past the sensors. The various fluids are introduced one after the other into the flow channel by means not described in detail in the document, and a pump is required to achieve the fluid flow.

Another apparatus for the automatic electrochemical analysis of a fluid is known from US-A-3,556,950, in which containers holding quantities of the sample fluid and a standard solution are connected, via a rotary valve, to a tubing which permits the fluids to come into contact with a series of electrodes each of which is sensitive to a different ion contained in the respective fluid. Again, the flow of the fluids through the tubing is established by a suction pump. A similar device is known from US-A-3,698,238.

US-A-4,366,040 teaches a blood analysing device in which a capillary reference electrode together with a capillary element is associated with a number of similarly arranged electrodes, which are sensitive to different ions, to form a measuring unit. The blood is fed through this unit to contact the various electrodes by externally applying a vacuum to a tube connected to the measuring unit.

All of the above known devices are primarily designed as expensive laboratory installations so that they require considerable equipment including valves and pumps to transport the sample and standard fluids through the measuring unit proper and also take comparatively large quantities of the blood or other sample fluid.

Summary of the Invention

It is an object of the present invention to provide an improved single-use sensing device for use with a clinical chemistry analyzer, in which calibration and sample fluids are applied to the sensing units by simple manual operation in an order that is predetermined by the structure of the device, without requiring any expensive equipment.

In accordance with the invention, this object is met by the sensing device defined in claim 1 and the method defined in claim 20.

Preferred embodiments of the invention are set forth in the dependent claims.

Brief Description of the Drawings

Figure 1 is a perspective view of a preferred embodiment of an analyzer and a disposable sensing device of the present invention which form a clinical chemistry analyzer system.

Figure 2 is a perspective view of the diposable sensing device.

Figures 3A-3C show top views of the support sleeve, capillary passage and sensors of the sensing device with the rotating cylinder (shown in phantom) at a start position, a calibrant test position, and sample test position, respectively.

Figures 4A, 4B and 4C are top views of the rotating cylinder (with portions of the cap removed for clarity in Figures 4B and 4C) at the start position, the calibrant test position, and sample test position, respectively.

Figures 5A-5C are sectional views of the sensing device along Section 5-5 with the rotating cylinder at the start position, the calibrant test position, and the sample test position, respectively.

Figure 6 is a perspective view, generally from the bottom, of the cap.

Figures 7A and 7B are perspective views, generally from the bottom, of the rotating cylinder.

Figure 8 is an exploded perspective view of the sensing device.

Detailed Description of the Preferred Embodiments

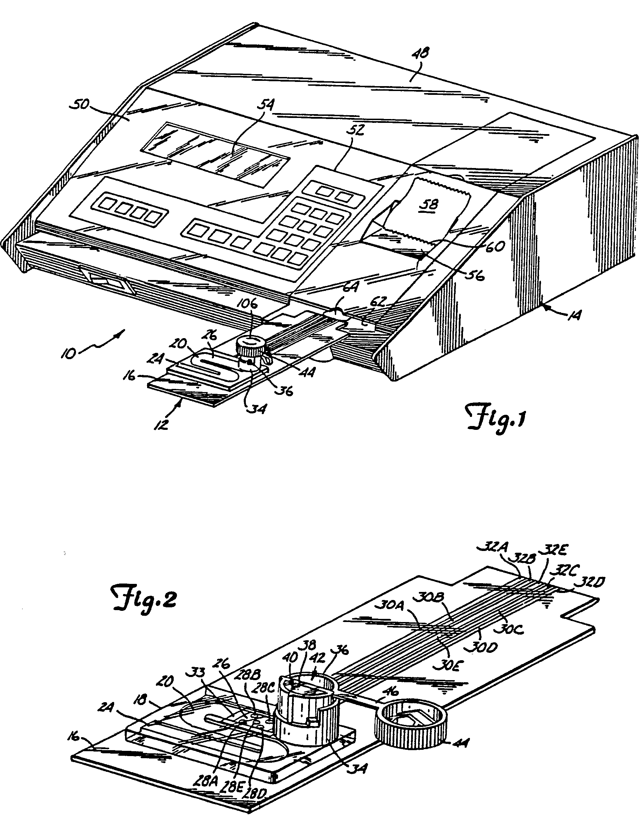

Figure 1 shows a clinical chemistry analyzer system 10 which includes disposable single-use sensing device 12 and analyzer 14. System 10 is a compact, self-contained portable system which facilitates usage in a physician's office, an operating room, or a clinical chemistry laboratory to measure concentrations of chemicals in blood and other body fluids.

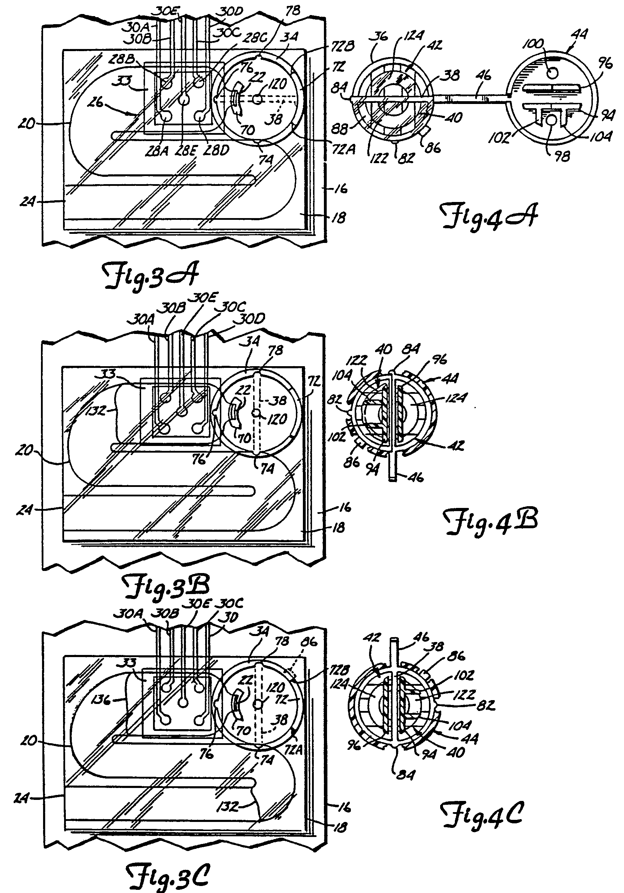

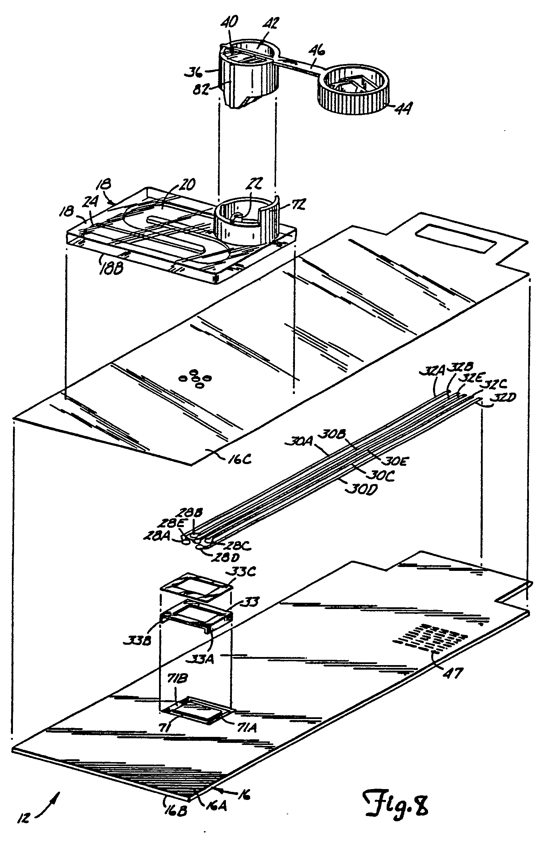

Sensing device 12 (which is shown in further detail in Figures 2-8) includes carrier 16 (which is in the form of a flat, generally rigid card) onto which plate 18 is bonded. In the embodiment illustrated in the Figures, plate 18 is a transparent plastic material, but it will be understood that in other embodiments plate 18 is not necessarily transparent. An S-shaped capillary passage 20 having an inlet 22 (Figures 3A-3C) and an outlet 24 is defined by carrier 16 and plate 18. Capillary passage 20 includes a test chamber or cavity 26 at an end nearest inlet 22. A plurality of sensors 28A-28E are supported by carrier 16 and exposed to the interior of test chamber 26 to interact with fluid contained within test chamber 26. Conductors 30A-30E extend between and interconnect sensors 28A-28E and electrical contacts 32A-32E, respectively. Electrical contacts 32A-32E are located near a front edge of carrier 16 to make electrical connection with the circuitry of analyzer 14. Insulating coating 16C (Figure 8) covers the entire top surface 16A of carrier 16, except for over sensors 28A-28E and over contacts 32A-32E.

Heat transfer element 33 (Figures 3A-3C) is embedded in carrier 16 and is positioned to transfer heat to fluid within test chamber 26 so that measurements are made with the fluid at body temperature (37°C).

Extending upward from top surface 18A of plate 18 and surrounding inlet 22 is cylindrical guide sleeve 34. Multi-chamber cylinder 36 is mounted for rotation within sleeve 34. Cylinder 36 has an interior wall 38 which divides the interior of cylinder 36 into calibrant chamber 40 which contains a calibrant fluid and sample chamber 42 which receives the sample of blood or other body fluid. The calibrant solution is factory sealed in chamber 40, and contains known concentrations of the species to be sensed by sensors 28A-28E. Cap 44, which is connected by web 46 to cylinder 36, is placed over the upper end of cylinder 36 after sample chamber 42 has received the body fluid sample.

Located on bottom surface 16B of carrier 16 is a bar code 47 (Figure 8) which contains information on the type of sensing device (i.e. the particular species being sensed), sensor calibration data (including a slope value for each species selective sensor) and a lot number. The bar code and the information contained therein are discussed in further detail in the previously mentioned copending applications.

Housing 48 of analyzer 14 contains all of the electronic circuitry used to calculate concentrations of the chemical species of interest based upon signals from sensors 28A-28E of disposable sensing device 12. Analyzer 14 is preferably of a size which is suitable for desk or bench top use, or for use on a cart. Front panel 50 of analyzer 14 includes keyboard 52 and display 54, which allow an operator to interact and control the operation of analyzer 14. Analyzer 14 also includes printer 56, which provides a hard copy printout of the output of analyzer 14 (which preferably includes calculated concentrations and other derived values, warnings of abnormalities, time and date, lot number and/or serial number of sensing device 12, sample type and patient name or identification number). This printout is provided on print paper 58 which is fed out through opening 60.

Receptacle 62 of analyzer 14 is positioned to receive the forward end of sensing device 12.

Within housing 48 there are electrical connectors positioned to connect contacts 32A-32E of sensing device 12 with the circuitry of analyzer 14. Also positioned adjacent to receptacle 62 is heater 64, which is contacted by heat transfer element 33. The heat produced by heater 64 is transferred by heat transfer element 33 to the fluid within test chamber 26 to heat the fluid to body temperature (37°C). Also positioned adjacent to receptacle 62 is a bar code reader (not shown) for reading the information contained in the bar code when sensing device 12 is inserted into receptacle 62.

In system 10 of the present invention, sensors 28A-28E are calibrated immediately before the measurement of concentration of species in the sample. Just before device 12 is inserted into receptacle 62, the operator rotates cap 44 and cylinder 36 by 90° from a start position (illustrated in Figures 1, 2, 3A, 4A and 5A) to a calibrant test position (illustrated in Figures 3B, 4B and 5B) at which calibrant chamber 40 is connected to inlet 22 of capillary passage 20. The calibrant fluid contained within calibrant chamber 40 flows into test chamber 26, where it contacts sensors 28A-28E. When the flow of the calibrant fluid stops due to reduced hydraulic head and capillary action, and the calibrant fluid has been heated to body temperature, the calibrant test readings are made by analyzer 14. Once these readings have been made, the operator rotates cap 44 and cylinder 36 by 180° to a sample test position (illustrated in Figures 3C, 4C and 5C) at which sample chamber 42 is connected to inlet 22. The sample fluid flows into the chamber 26, and displaces the calibrant fluid into the narrower downstream portions of capillary passage 20. Thus test chamber 26 is purged of calibrant fluid by the sample fluid. The flow of the sample fluid into test chamber 24 stops, due to decreasing hydraulic head and capillary action, the sample fluid is heated to body temperature by heat transfer element 33, and the final measurements are made by analyzer 14. Based upon the sensor readings when calibrant fluid was in test chamber 26 and when the sample fluid was in test chamber 26, analyzer 14 derives concentrations and other values based upon those concentrations for each of the species of interest in the sample fluid.

With the present invention, therefore, the supply and control of flow of calibrant and sample fluids is achieved without degrading the fluids, and without the use of pumps or valves. In sensing device 12 of the present invention, both flow and control of the fluids are provided by a combination of liquid head and capillary forces.

The calibrant and sample fluids are aqueous. The calibrant fluid is typically a weak salt solution which flows essentially the same as pure water. The sample fluid (which is typically whole blood) is more viscous than water. It is also somewhat thixotropic. This means that it acts more viscous when flowing slowly than when flowing rapidly.

In the present invention, the amounts of fluid to be used typically are very small (e.g. about 100 to 200 microliters). The flow channels (particularly inlet 22 and capillary passage 20) must also be small to accommodate these small fluid volumes. The fluid flow, therefore, will always be laminar (viscous) in nature.

The main characteristic of viscous flow is that all the drag, against the flow of the fluid, is imposed at and by the wall of the channel and is transmitted to the fluid not near the wall by the fluid's viscosity. This means that a fluid with viscous flow will normally have a velocity profile which is a maximum at the center of the channel and substantially zero at the wall.

Liquid head is easy to understand: a liquid will flow out an opening in the bottom of a reservoir because of the pressure exerted by the liquid in the reservoir. The pressure provided by the liquid depends upon the liquid density and the height of the liquid in the reservoir.

Capillary force exists where a liquid and a gas are next to each other in a channel. This force is caused by the "attraction" of the liquid for the solid walls of the channel. The attraction is best understood as wetting ability of the liquid for the particular solid which forms the walls.

A liquid which wets a solid, such as pure water will wet clean glass, will exhibit a positive capillary force. This means the capillary force will tend to pull the liquid in the direction of the gas-liquid interface.

A liquid which does not wet a given solid (such as pure water will not wet polytetrafluoroethylene or greasy glass) will have a negative capillary force. In that case, the capillary force tends to push the liquid away from the gas-liquid interface.

Since the capillary force is exerted at the wall of the channel, the amount of force depends upon the circumference of the channel and the wetting ability of the liquid for the walls of the channel. The pressure is equal to the force divided by the cross-sectional area of the channel. In other words, the capillary pressure depends upon the ratio between the circumference of the channel and its cross-sectional area. The higher the ratio of circumference to area (such as is provided by a smaller channel), the higher the capillary pressure.

The use of capillary force as a pumping force tends to directly counteract the drag imposed by viscous forces and the effect of viscous forces on the velocity profile. The capillary force, which provides "pull" at the wall, counteracts the viscosity which imposes drag at the wall.

The operation of sensing device 12 of the present invention is described in further detail in Figures 3A-3C, 4A-4C and 5A-5C. Figures 3A, 4A and 5A illustrate the relative position of plate 18, sleeve 34, cylinder 36 and cap 44 at the "start" position immediately before the sample fluid is deposited in sample chamber 42. Figures 3A and 4A are side-by-side and the angular orientation of cylinder 36 with respect to sleeve 34 is shown by Figures 3A and 4A.

Figures 3B, 4B and 5B illustrate the relative positions of plate 18, sleeve 34 and cylinder 36 at the "calibrant test" position during measurements of the concentrations in the calibrant fluid. Figures 3B and 4B are side-by-side, and show the angular orientation of cylinder 36 with respect to sleeve 34. In Figure 4B, cap 44 has been broken away to show the interior of cylinder 36.

Figures 3C, 4C and 5C illustrate the relative position of cylinder 36 with respect to plate 18 and sleeve 34 at the "sample test" position when the chemical concentrations of the species of interest in the sample fluid are being measured. Once again, in Figure 4C, cap 44 is partially broken away to reveal the interior of cylinder 36.

In this preferred embodiment, capillary passage 20 is formed between top surface 16A of carrier 16 and bottom surface 18B of plate 18 in the form of a channel in lower surface 18B of plate 18. In other embodiments, of course, capillary passage 20 can be formed by a channel in top surface 16A of plate 16.

Inlet 22 is an orifice in plow 70, which projects upward from top surface 18A of plate 18. Outlet 24 is located at the edge of plate 18. Capillary passage 20 is an S-shaped passage, with the upstream end of passage 22 (which is connected to inlet 22) forming test cavity or chamber 26. Sensors 28A-28E are positioned within test chamber 26. The remainder of S-shaped capillary passage 20 is narrower than test chamber 26.

Heat transfer element 33 is a square ring which surrounds sensors 28A-28E and is inlaid in a channel 71 in top surface 16A of carrier 16. A pair of flanges 33A and 33B project downward through passages 71A and 71B in carrier 16 and are exposed at bottom surface 16B to contact heater 64. Heat transfer element 33 is preferably a metal such as copper coated on its top surface with an insulator 33C such as epoxy so that the metal is not directly in contact with the fluid in test chamber 26, and so that conductors 30A-30E can extend from sensors 28A-28E over heat transfer element 33 and over top surface 16A of carrier 16 to contacts 32A-32E.

In the preferred embodiment of the present invention illustrated in the Figures, sensors 28A-28D are species selective sensors, and sensor 28E is a reference sensor. Each species selective sensor 28A-28D has a coating which includes a polymer and an electroactive species. The polymer serves the functions of creating a membrane over the sensor active area and immobilizing the electroactive species next to the electrically conductive surface of sensors 28A-28D. The particular electroactive species of each sensor 28A-28D differs, depending upon the species to be sensed. Reference sensor 28E either has no coating at all, or has a coating which is not specific to the particular chemical species of interest. Reference sensor 28E provides a reference from which an electrical measurement can be made by analyzer 14. By measuring an electrical characteristic (for example electrical potential or current) between each of the species sensors 28A-28D and reference sensor 28E, a set of signals or "readings" which are a function of chemical concentration of the particular chemical species of interest being sensed by species sensors 28A-28D can be obtained. In the present invention, these measurements are made twice, first with the calibrant fluid, and then with sample fluid. Based upon the two sets of readings and the slope calibration value read from the bar code, analyzer 14 calculates the concentration of each of the chemical species of interest in the sample fluid.

Sleeve 34 projects upward from top surface 18A of plate 18. In a preferred embodiment of the present invention, sleeve 34 and plate 18 are an integral molded plastic part. Raised wall 72 projects upward above the remainder of sleeve 34 to define a pair of stop shoulders 72A and 72B. Sleeve 34 also includes vertical grooves 74, 76 and 78 which provide positive definition of the start, calibrant test and sample test positions of cylinder 36. Cylinder 36 has a circular cylindrical wall 80 with a pair of vertical ribs 82 and 84 and a stop projection 86. Ribs 82 and 84 and stop 86 cooperate with grooves 74, 76 and 78 and raised wall 72 of sleeve 34 to define the three positions and the direction of rotation of cylinder 36.

Dividing wall 38 is a vertical wall which divides the interior of cylinder 36 into two chambers: calibrant chamber 40 and sample chamber 42. The upper end of calibrant chamber 40 is sealed by membrane 88. The calibrant fluid is placed within calibrant chamber 40 during manufacturing of device 12, and calibrant chamber 40 is sealed by membrane 88 to prevent any spilling or evaporation of the calibrant fluid prior to the use of sensing device 12.

Sample chamber 42 has an open upper end to allow the medical personnel to deposit blood or other body fluid into sample chamber 42.

In the preferred embodiment illustrated in the Figures, cap 44 and cylinder 36 are an integral molded plastic unit connected by web 46. Cap 44 has a cylindrical side wall 90 (with a slightly larger inside diameter than the outside diameter of cylinder 36) and a circular top 92. A pair of parallel drive flanges 94 and 96 are positioned so that when cap 44 is placed over the upper end of cylinder 36, flange 94 extends into calibrant chamber 40 and flange 96 extends into sample chamber 42 on opposite sides of dividing wall 38. Flanges 94 and 96 impart rotational force from cap 44 to cylinder 36 as cap 44 is rotated from the start position illustrated in Figures 3A, 4A and 5A to the calibrant test position shown in Figures 3B, 4B and 5B, and later to the sample test position illustrated in Figures 3C, 4C and 5C.

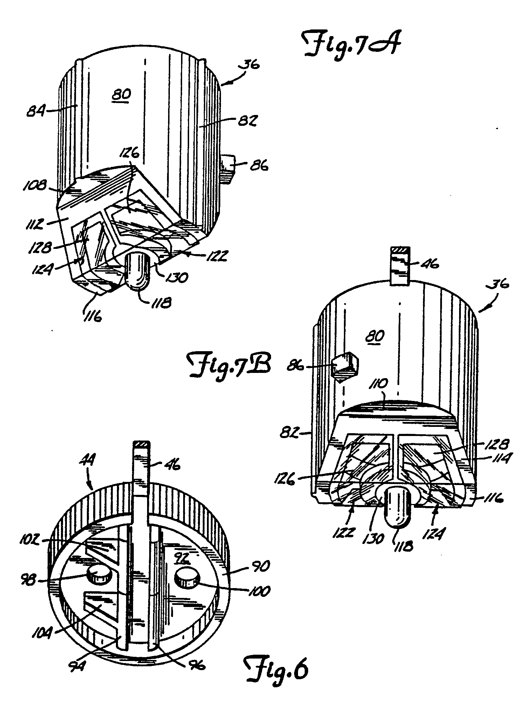

Cap 44 (which is also shown in perspective in Figures 6) has a pair of vent holes 98 and 100 which overlie calibrant and sample chambers 40 and 42, respectively, when cap 44 is placed over cylinder 36. Drive flange 94 and gussets 102 and 104 (which are positioned on opposite sides of vent hole 98) are pointed to form a piercing blade which ruptures membrane 88 when cap 44 is placed over the upper end of cylinder 36.

Cylindrical wall 90 of cap 44 preferably has a knurled or grooved outer surface to aid the medical personnel in gripping and turning cap 44 and cylinder 36. Top 92 of cap 44 also preferably includes a pair of arrow indicators 106 (Figure 1) which indicate to the operator the direction of rotation of cap 44 and cylinder 36.

As best shown in Figures 7A and 7B, the bottom of cylinder 36 has a partially pyramidal or "V" shape formed by a pair of inwardly projecting flanges or shoulders 108 and 110, a pair of inclined walls 112 and 114 and end wall 116. Pilot pin 118 extends axially downward from lower end wall 116, and is captured within opening 120 of plate 18 to define an axis of rotation of cylinder 36.

Shoulders 108 and 110 lie in a common plane which is generally perpendicular to the axis of cylinder 36. Shoulders 108 and 110 extend longitudinally in a direction perpendicular to dividing wall 38.

Inclined walls 112 and 114 are connected at their upper ends to shoulders 108 and 110, respectively. At their lower ends, walls 112 and 114 are connected to end wall 116. Each wall 112 and 114 is generally perpendicular to dividing wall 38.

End wall 116 is intersected by and is perpendicular to the central axis of cylinder 36. End wall 116 lies in a plane perpendicular to the central axis of cylinder 36 and extends in a longitudinal direction which is perpendicular to dividing wall 38.

Formed in inclined walls 112 and 114 and end wall 116 are a pair of arcuate openings 122 and 124 which communicate with chambers 40 and 42, respectively. Openings 122 and 124 divide inclined walls 112 and 114 and end wall 116 to create a central island 130 supported by dividing wall 38 and from which pilot pin 118 projects downward.

Membrane 126 covers opening 122 to seal the lower end of calibrant chamber 40. Similarly, membrane 128 covers opening 124 to seal the lower end of sample chamber 42. Membranes 126 and 128 (which are preferably inert polymer films) generally conform to the pyramidal or "V" shaped profile defined by inclined walls 112 and 114 and end wall 116.

In the start position shown in Figures 3A, 4A and 5A, cap 44 is open and cylinder 36 is positioned within sleeve 34 so that rib 82 is positioned in groove 74; rib 84 is positioned in groove 76; and stop projection 86 is positioned adjacent shoulder 72A. In this position, dividing wall 38 is located over plow 70 and, due to the profile of the bottom of cylinder 36, plow 70 is not in engagement with either membrane 126 or membrane 128.

When the sample fluid has been deposited in chamber 42 and testing is ready to begin, the operator provides an input to analyzer 14 through keyboard 52. Analyzer 14 then displays a prompt message, through display 54 which instructs the operator to close cap 44 over cylinder 36, to rotate cap 44 to the calibrant test position (illustrated in Figures 3B, 4B and 5B) and to insert device 12 into receptacle 62.

As cap 44 is placed over the top end of cylinder 36, flange 94 and gussets 102 and 104 rupture top membrane 88 to expose the interior of calibrant chamber 40 to the atmosphere through vent hole 98. Vent hole 100 provides exposure of sample chamber 42 to atmospheric pressure. No movement of fluid occurs, however, because the bottom ends of calibrant chamber 40 and sample chamber 42 are sealed by membranes 126 and 128, respectively.

Insertion of device 12 into receptacle 62 causes the bar code on the bottom of device 12 to be read and connects contacts 32A-32E to analyzer 14. It also brings heat transfer element 33 into contact with heater 66.

Rotation of cap 44 and cylinder 36 is possible in only one direction (clockwise) due to shoulder 72A and projection 86. The calibrant test position is positively defined by grooves 76 and 78. Rib 82 is positioned within groove 76, and rib 84 is positioned in groove 78 when cylinder 36 is in the calibrant test position.

As cylinder 36 is turned from the start position to the calibrant test position, the leading edge of plow 70 ruptures membrane 126 to insert inlet 22 (which is located within plow 70) into the calibrant fluid. The top end of plow 70 projects into calibrant chamber 40 to ensure fluid communication between inlet 22 and chamber 40.

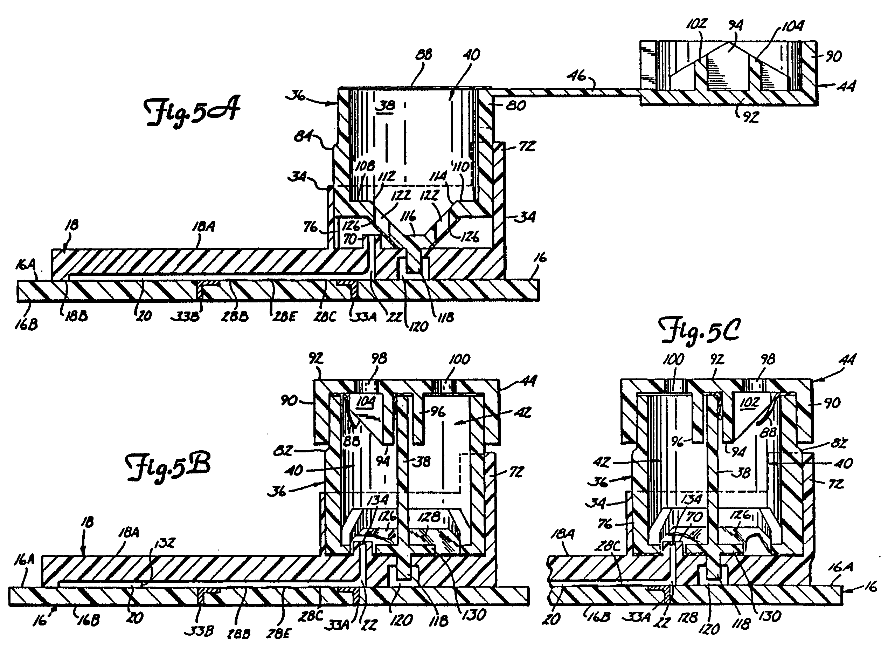

The calibrant fluid within calibrant chamber 40 is drawn down through inlet 22 and into test chamber 26 of capillary passage 20 (as illustrated by the arrows in Figure 5B. The calibrant fluid is drawn down by a combination of capillary force and hydraulic head, until calibrant chamber 40 is empty.

When calibrant chamber 40 is empty, the flow of calibrant fluid stops for two reasons. First, the hydraulic head is greatly reduced. Second, the capillary force exerted by the small orifice (inlet 22), which acts in a reverse direction, is greater than that exerted by the larger main capillary passage 20. This is because inlet 22 has a higher circumference-to-area ratio, and therefore exerts a greater capillary pressure than does test chamber 26. Put another way, forward gas-liquid interface 132 in test chamber 26 cannot provide enough "pull" to pull rearward gas-liquid interface 134 through the much smaller inlet orifice 22.

With flow stopped, calibrant fluid is heated to body temperature by heat transfer element 33. Readings are then made by analyzer 14, based upon the interaction of species selective sensors 28A-28D and reference sensor 28E with the calibrant fluid.

While calibrant testing is occurring, analyzer 14 displays a prompting message which requests entry of a patient identification number. The operator enters the patient identification number through keyboard 52.

Once the calibrant test readings have been completed, analyzer 14 displays a prompting message through display 54 instructing the operator to rotate cap 44 and cylinder 36 to the sample test position (Figures 3C, 4C and 5C). In the sample test position, rib 84 is positioned in groove 74 and stop 86 is adjacent shoulder 72B. This prevents any over-rotation of cylinder 36 beyond the sample test position.

As cap 44 and cylinder 36 are rotated from the calibrant test position through 180° to the sample test position, plow 70 tears open membrane 128 which seals the bottom of sample chamber 42, and inlet 22 is inserted into the sample fluid. This releases the capillary pressure imposed by inlet 22 (because inlet 22 is now under the sample fluid so that rearward liquid-gas interface 134 is no longer located at inlet 22). This allows the sample fluid to be drawn into capillary channel 20, thus purging the calibrant fluid from test chamber 26 and replacing it with sample fluid. The movement of sample fluid into test chamber 26 continues and calibrant sample fluid boundary 136 moves downstream until either the sample chamber 42 is empty and flow stops because rearward liquid-gas interface 134 is again located at inlet 22; or forward liquid-gas interface 132 reaches outlet 24 of capillary passage 20 (whereupon the flow stops because the capillary pressure provided by capillary passage 20 stops).

Once flow has stopped, the sample fluid is heated, and analyzer 14 takes a second set of measurements which are based upon the interaction of sensors 28A-28E with the sample fluid. When the measurements have been completed, analyzer 14 provides a prompting message which indicates to the operator that sensing device 12 can be removed from receptacle 62. Analyzer 14 calculates concentration values for each of the species of interest based upon the calibrant and sample sets of readings, and provides an output through display 54 and printer 56 which indicates the patient's identification number, and the measured concentrations and other values derived from those measured concentrations.

With the present invention, reliable sensing of concentrations of chemical species in very small samples is achieved. The operation of the system is independent of the size of the sample, as long as it is greater than a predetermined minimum amount such as 100 microliters.

The present invention provides calibration of the sensors immediately before measurement, and provides results which are available within a matter of a several minutes. This calibration is achieved without requiring any handling of calibrant fluids, or any other manual action other than the rotation of the cap 44 and cylinder 36 from the start position to the calibrant test position.

The present invention is also simple in construction and operation and therefore reliable as to both the accuracy of results provided and the ease of operation (and therefore the probability of correct operation).

In the present invention, the calibrant and sample fluids are caused to flow and to stop as necessary without the need for pumps or valves. Sensing device 12, therefore, has a minimum number of parts, and is capable of being manufactured on a large-scale, automated basis. This ensures the low cost, disposable nature of sensing device 12.

The present invention provides reliably consistent purging of the calibrant fluid from test chamber 26 by the sample fluid. This purging feature is achieved because the "pumping" pressure (which is determined by the geometry of capillary passage 20) is always the same; and because the flow is low enough that the thixotropic nature of the sample fluid (which is typically whole blood) tends to cause it to flow as a plug instead of a parabola.

In some cases, multiple calibrant tests prior to the sample test can be advantageous. The present invention is particularly well suited to these more complicated sets of calibrant tests, since multiple calibrant tests can be accommodated by dividing cylinder 36 into more than two chambers. In that case, each calibrant chamber is rotated in turn to inlet 22 and a corresponding set of calibrant test readings are taken. Thereafter, the sample chamber is rotated to inlet 22 and the sample test readings taken.

Although the present invention has been described with reference to preferred embodiments, workers skilled in the art will recognize that changes may be made in form and detail without departing from the spirit and scope of the invention.

For example, although the embodiment illustrated in the Figures shows conductors 30A-30E and contacts 32A-32E on the top surface 16A of carrier 16, in other embodiments they are positioned on bottom surface 16B. In those embodiments, the electrode portions of sensors 28A-28E extend through carrier 16 to be exposed at bottom surface 16B. In still other embodiments contacts 30A-30E are not required, and contacts 32A-32E are the bottom surfaces of the electrode portions of sensors 28A-28E which are exposed at bottom surface 16B and are contacted directly by an array of spring loaded contacts positioned along the bottom side of receptacle 62.

## Claims

1. A disposable single-use sensing device for use with a clinical chemistry analyzer, which determines a concentration of a selected chemical species in a sample fluid based upon sensor signals, the sensing device (12) comprising:
   a carrier (16);
   a calibrant chamber (40) for containing a calibrant fluid;
   a sample chamber (42) for containing the sample fluid;
   a capillary passage (20) supported by the carrier (16) and having an inlet (22) and having an outlet (24) which is open to ambient air;
   first rupturable seal means (126) for sealing an end of the calibrant chamber (40);
   second rupturable seal means (128) for sealing an end of the sample chamber (42);
   means (74, 76, 78, 82, 84, 86) for defining a start position in which neither the calibrant chamber (40) nor the sample chamber (42) is connected to the inlet (22), a calibrant test position in which the calibrant chamber (40) is connected to the inlet (22), and a sample test position in which the sample chamber (42) is connected to the inlet (22);
   means (76) for rupturing the first seal means (126) to permit the calibrant chamber (40) to be connected to the inlet (22) and rupturing the second seal means (128) to permit the sample chamber (42) to be connected to the inlet (22);
   mounting means (34) for mounting the calibrant and sample chambers (40, 42) to permit sequential relative movement of the chambers with respect to the inlet (22) of the capillary passage (20) from the start position to one of the test positions to draw the fluid from one of the chambers into the capillary passage and then to the other of the test positions to draw the fluid from the other chamber into the capillary passage, the fluid being drawn by capillary action; and
   sensing means (28A-28E) for sensing concentration of the chemical species, the sensing means being positioned in communication with the capillary passage (20) to provide sensor signals which are a function of sensed concentrations of the chemical species in the calibrant fluid and in the sample fluid.

2. The sensing device of claim 1, wherein the capillary passage (20) has a test chamber (26) of a first circumference connected to the inlet (22) and a downstream channel of a second smaller circumference connected between the test chamber (26) and the outlet (24).

3. The sensing device of claim 2, wherein the sensing means (28A-28E) is positioned in the test chamber (26).

4. The sensing device of claim 3, wherein the capillary passage (20) is S-shaped.

5. The sensing device of claim 1, wherein the mounting means (34) rotatably connects the calibrant chamber (40) and the sample chamber (42) with the carrier.

6. The sensing device of claim 5, wherein the mounting means includes a cylindrical guide sleeve (34) supported by the carrier (16), and wherein the calibrant and sample chambers (40, 42) are within a cylinder (36) which is rotatably mounted in the cylindrical guide sleeve (34).

7. The sensing device of claim 6, further comprising a rupturable top seal (88) covering a top end of the calibrant chamber (40), and means (94, 102, 104) for rupturing the top seal (88) to expose the calibrant fluid to atmospheric pressure.

8. The sensing device of claim 7, further comprising a cap (44) for fitting over an upper end of the cylinder (36).

9. The sensing device of claim 8, wherein the cap (44) has vent means (98, 100) for exposing calibrant fluid and sample fluid within the chambers (40, 42) to atmospheric pressure.

10. The sensing device of claim 9, wherein the vent means comprises a vent hole (98, 100) in the cap (44) positioned over each of the chambers (40, 42).

11. The sensing device of claim 8, wherein the means (94, 102, 104) for rupturing the seal (88) at the top end is carried by the cap (44).

12. The sensing device of claim 8, wherein the cylinder (36) includes a vertical dividing wall (38) for dividing an interior of the cylinder into the calibrant and sample chambers (40, 42).

13. The sensing device of claim 12, wherein the cap (44) includes a first drive flange (94) extending generally downward from an interior surface of the cap for engaging the dividing wall (38) to transmit rotational force from the cap (44) to the cylinder (36) when the cap is rotated.

14. The sensing device of claim 13, wherein the cap (44) further includes a second drive flange (96) spaced from the first drive flange (94) and extending downward from the interior surface of the cap (44) for engaging the dividing wall (38) to transmit rotational force from the cap (44) to the cylinder (36).

15. The sensing device of claim 13, wherein the means for rupturing the top seal (88) includes the first drive flange (94).

16. The sensing device of claim 15, wherein the means for rupturing the top seal (88) further includes a plurality of gussets (102, 104) connected to the first drive flange (94), the gussets and first drive flange forming a downwardly pointed blade for rupturing the top seal (88).

17. The sensing device of claim 1, further comprising means (72A, 86) for limiting rotation of the cylinder (36) from the start position to a direction toward the calibrant test position.

18. The sensing device of claim 7, wherein the cylinder (36) has a vertical dividing wall (38) for dividing an interior of the cylinder into the calibrant and sample chambers (40, 42) and has a generally V-shaped bottom which includes a pair of inclined walls (112, 114) which are generally perpendicular to the dividing wall (38).

19. The sensing device of claim 1, wherein the means for defining a start position, a calibrant test position and a sample test position comprises a plurality of circumferentially spaced detents (82, 84, 86).

20. A method for determining a concentration of a selected chemical species in a sample fluid using a sensing device which includes a multichamber reservoir (36) having a sealed calibrant chamber (40) which contains a calibrant fluid and a sample chamber (42), a capillary passage (20) having an inlet (22), an outlet (24), a test chamber (26) connected to the inlet (22), and a species selective sensor (28A-28E) which exhibits a predetermined measurable characteristic which is a function of concentration of the selected chemical species, the method comprising:

placing sample fluid in the sample chamber (42);

moving the reservoir (36) from a start position in which neither the calibrant chamber (40) nor the sample chamber (42) is connected to the inlet (22), to a first test position in which a first seal (126) is broken so that one (40) of the calibrant and sample chambers is connected to the inlet (22) to cause fluid from that chamber (40) to be drawn into the test chamber (26);

measuring the predetermined measurable characteristic while the fluid from the one chamber (40) is in the test chamber (26);

moving the reservoir (36) from the first test position to a second test position in which a second seal (128) is broken so that the other (42) of the calibrant and sample chambers is connected to the inlet (22) to cause the fluid from the other chamber (42) to be drawn by capillary action into the test chamber (26) and purge the fluid from the one chamber (40) from the test chamber (26) into a downstream channel;

measuring the predetermined measurable characteristic while the fluid from the other chamber (42) is in the test chamber (26); and

deriving a concentration of the selected chemical species in the sample fluid based upon the predetermined measurable characteristics as measured when the calibrant fluid was in the test chamber (26) and when the sample fluid was in the test chamber (26).

**Patentansprüche**

1. Zum einmaligen Gebrauch und Wegwerfen bestimmter Sensor zur Verwendung in Verbindung mit einem klinischen Chemo-Analysegerät, das eine Konzentration einer ausgewählten chemischen Substanz in einem Probefluid aufgrund von Sensorsignalen bestimmt, wobei der Sensor (12) umfaßt

einen Träger (16);

eine Eichkammer (40) zur Aufnahme eines Eichfluids;

eine Probenkammer (42) zur Aufnahme des Probefluids;

einen auf den Träger (16) angeordneten Kapillarkanal (20) mit einem Einlaß (22) und einem gegenüber der Umgebungsluft offenen Auslaß (24);

eine eine Seite der Eichkammer (40) abdichtende erste aufreißbare Dichtung (126);

eine eine Seite der Probenkammer (42) abdichtende zweite aufreißbare Dichtung (128);

eine Einrichtung (74, 76, 78, 82, 84, 86), die eine Abfangsstellung, in der weder die Eichkammer (40) noch die Probenkammer (42) mit dem Einlaß (22) verbunden ist, eine Eich-Teststellung, in der die Eichkammer (40) mit dem Einlaß (22) verbunden ist, und eine Proben-Teststellung definiert, in der die Probenkammer (42) mit dem Einlaß (22) verbunden ist;

eine Einrichtung (76) zum Aufreißen der ersten Dichtung (126), um die Eichkammer (40) mit dem Einlaß (22) in Verbindung zu bringen, und zum Aufreißen der zweiten Dichtung (128), um die Probenkammer (42) mit dem Einlaß (22) in Verbindung zu bringen;

eine Halterungseinrichtung (34), die die Eichund die Probekammer (40, 42) so haltert, daß sie eine sequentielle Relativbewegung der Kammern bezüglich des Einlasses (22) des Kapillarkanals (20) aus der Anfangsstellung in eine der Teststellungen gestattet, um das Fluid aus einer der Kammern in den Kapillarkanal zu saugen, und dann in die andere der Teststellungen, um das Fluid aus der anderen Kammer in den Kapillarkanal zu saugen, wobei das Fluid durch Kapillarwirkung gesaugt wird; und

eine Sensoreinrichtung (28A-28E) zum Erfassen der Konzentration der chemischen Substanz, wobei die Sensoreinrichtung in Verbindung mit dem Kapillarkanal (20) angeordnet ist, um Sensorsignale zu liefern, die eine Funktion der erfaßten Konzentrationen der chemischen Substanz in dem Eichfluid und in dem Probefluid sind.

2. Sensor nach Anspruch 1, wobei der Kapillarkanal (20) eine mit dem Einlaß (22) verbundene Testkammer (26) eines ersten Umfangs und einen zwischen die Testkammer (26) und den Auslaß (24) eingeschalteten stromabwärts gelegenen Kanal eines zweiten geringeren Umfangs aufweist.

3. Sensor nach Anspruch 2, wobei die Sensoreinrichtung (28A—28E) in der Testkammer (26) angeordnet ist.

4. Sensor nach Anspruch 3, wobei der Kapillarkanal (20) S-förmig ist.

5. Sensor nach Anspruch 1, wobei die Halterungseinrichtung (34) die Eichkammer (40) und die Probenkammer (42) drehbar mit dem Träger verbindet.

6. Sensor nach Anspruch 5, wobei die Halterungseinrichtung eine auf dem Träger (16) angeordnete zylindrische Führungshülse (34) aufweist und die Eich- und Probenkammern (40, 42) in einem in der zylindrischen Führungshülse (34) drehbar gelagerten Zylinder (36) angeordnet sind.

7. Sensor nach Anspruch 6, ferner umfassend eine ein oberes Ende der Eichkammer (40) bedekkende aufreißbare obere Dichtung (88) und eine Einrichtung (94, 102, 104) zum Aufreißen der oberen Dichtung (88), um das Eichfluid dem Atmosphärendruck auszusetzen.

8. Sensor nach Anspruch 7, ferner umfassend eine Kappe (44) zum Aufsetzen auf ein oberes Ende des Zylinders (36).

9. Sensor nach Anspruch 8, wobei die Kappe (44) eine Belüftungseinrichtung (89, 100) aufweist, um das Eichfluid und das Probefluid innerhalb der Kammern (40, 42) dem Atmosphärendruck auszusetzen.

10. Sensor nach Anspruch 9, wobei die Belüftungseinrichtung eine in der Kappe (44) über jeder der Kammern (40, 42) jeweils angeordnetes Belüftungsloch (98, 100) aufweist.

11. Sensor nach Anspruch 8, wobei die Einrichtung (94, 102, 104) zum Aufreißen der oberen Dichtung (88) an der Kappe (44) angeordnet ist.

12. Sensor nach Anspruch 8, wobei der Zylinder (36) eine vertikale Trennwand (38) zum Unterteilen des Zylinderinneren in die Eich- und Probenkammern (40, 42) aufweist.

13. Sensor nach Anspruch 12, wobei die Kappe (44) einen von ihrer Innenfläche generell nach unten ragenden ersten Antriebsflansch (94) zum Eingriff mit der Trennwand (44) aufweist, um bei Drehen der Kappe (44) die Drehkraft von dieser auf den Zylinder (36) zu übertragen.

14. Sensor nach Anspruch 13, wobei die Kappe (44) in Abstand von dem ersten Antriebsflansch (44) einen von ihrer Innenfläche nach unten ragenden zweiten Antriebsflansch (96) zum Eingriff mit der Trennwand (38) aufweist, um die Drehkraft von der Kappe (44) auf den Zylinder (36) zu übertragen.

15. Sensor nach Anspruch 13, wobei die Einrichtung zum Aufreißen der oberen Dichtung (88) den ersten Antriebsflansch (94) umfaßt.

16. Sensor nach Anspruch 15, wobei die Einrichtung zum Aufreißen der oberen Dichtung (88) mehrere mit dem ersten Antriebsflansch (94) verbundene Einsätze (102, 104) aufweist, wobei diese und der erste Antriebsflansch eine nach unten weisende Klinge zum Aufreißen der oberen Dichtung (88) bilden.

17. Sensor nach Anspruch 1, ferner umfassend eine Einrichtung (72A, 86) zur Begrenzung der Drehung des Zylinders (36) aus der Anfangsstellung in Richtung der Eich-Teststellung.

18. Sensor nach Anspruch 7, wobei der Zylinder (36) eine vertikale Trennwand (38) zum Unterteilen des Zylinderinnern in die Eich- und Probenkammern (40, 42) sowie einen generell keilförmigen Boden mit einem Paar von zu der Trennwand (38) generell senkrecht verlaufenden geneigten Wänden (112, 114) aufweist.

19. Sensor nach Anspruch 1, wobei die die Anfangsstellung, die Eich-Teststellung und die Proben-Teststellung definierende Einrichtung mehrere in Umfangsrichtung verteilte Arretierungen (82, 94, 86) aufweist.

20. Verfahren zum Bestimmen einer Konzentration einer ausgewählten chemischen Substanz in einem Probefluid unter Verwendung eines Sensors, der einen Mehrkammer-Behälter (36) mit einer ein Eichfluid enthaltenden abgedichteten Eichkammer (40) und einer Probenkammer (42), einen Kapillarkanal (20) mit einem Einlaß (22), einem Auslaß (24), einer mit dem Einlaß (22) verbundenen Testkammer (24) und einer substanz-selektiven Sensoreinrichtung (28A-28E) umfaßt, die eine vorgegebene meßbare Charakteristik als Funktion der Konzentration der ausgewählten chemischen Substanz aufweist, wobei das Verfahren folgende Schritte umfaßt:

Einbringen eines Probefluids in die Probenkammer (42);

Bewegen des Behälters (36) aus einer Anfangsstellung, in der weder die Eichkammer (40) noch die Probenkammer (42) mit dem Einlaß (22) verbunden ist, in eine erste Teststellung, in der eine erste Dichtung (126) aufgerissen wird, so daß eine (40) der Eich- und Probenkammern mit dem Einlaß (22) verbunden und das Fluid aus dieser Kammer (40) in die Testkammer (26) gesaugt wird;

Messen der vorgegebenen meßbaren Charakteristik, während sich das Fluid aus der einen Kammer (40) in der Testkammer (26) befindet;

Bewegen des Behälters (36) aus der ersten Teststellung in eine zweite Teststellung, in der eine zweite Dichtung (128) aufgerissen wird, so daß die andere (43) der Eich- und Probenkammern mit dem Einlaß (22) verbunden, das Fluid aus der anderen Kammer (42) durch Kapillarwirkung in die Testkammer (26) gesaugt und das Fluid aus der einen Kammer (40) aus der Testkammer (26) in einen stromabwärts befindlichen Kanal gespült wird;

Messen der vorgegebenen meßbaren Charakteristik, während sich das Fluid aus der anderen Kammer (42) in der Testkammer (26) befindet; und

Ableiten einer Konzentration der ausgewählten chemischen Substanz in dem Probefluid aufgrund der vorbestimmten meßbaren Charakteristika, wie sie gemessen wurden, als sich das Eich-fluid bzw. das Probefluid in der Testkammer (26) befanden.

**Revendications**

1. Dispositif de détection à utilisation unique, jetable, pour un appareil d'analyse chimique clinique, qui détermine une concentration d'une substance chimique choisie dans un fluide échantillon en fonction de signaux de capteur, le dispositif de détection (12) comportant:

un support (16);

une chambre d'étalonnage (40) pour contenir un fluide d'étalonnage;

une chambre d'échantillon (42) pour contenir le fluide échantillon;

un passage capillaire (20) supporté par le support (16) et possédant un orifice d'admission (22) et possédant un orifice de sortie (24) qui est ouvert à l'air ambiant;

des premiers moyens d'étanchéité pouvant être rompus (126) pour fermer une extrémité de la chambre d'étalonnage (40);

des seconds moyens d'étanchéité pouvant être rompus (128) pour fermer une extrémité de la chambre d'échantillon (42);

des moyens (74, 76, 78, 82, 84, 86) pour définir une position de départ dans laquele ni la chambre d'étalonnage (40) ni la chambre d'échantillon (42) n'est reliée à l'orifice d'admission (22), une position d'essai d'étalonnage dans laquelle la chambre d'étalonnage (40) est reliée à l'orifice d'admission (22), et une position d'essai d'échantillon dans laquelle la chambre d'échantillon (42) est reliée à l'orifice d'admission (22);

des moyens (76) pour rompre les premiers moyens d'étanchéité (126) pour permettre à la chambre d'étalonnage (40) d'être reliée à l'orifice d'admission (22) et pour rompre les seconds moyens d'étanchéité (128) pour permettre à la chambre d'échantillon (42) d'être reliée à l'orifice d'admission (22);

des moyens supports (34) pour supporter les chambres d'étalonnage et d'échantillon (40, 42) pour permettre un mouvement relatif séquentiel des chambres par rapport à l'orifice d'admission (22) du passage capillaire (20) depuis la position de départ dans l'une des positions d'essai pour aspirer le fluide depuis une des chambres dans le passage capillaire et ensuite dans l'autre des positions d'essai pour aspirer le fluide de l'autre chambre dans le passage capillaire, le fluide étant aspiré par capillarité; et

des moyens de détection (28A-28E) pour détecter une concentration de la substance chimique, les moyens de détection étant disposés en communication avec le passage capillaire (20) pour délivrer des signaux de capteur qui sont une fonction de concentrations détectées de la substance chimique dans le fluide d'étalonnage et dans le fluide échantillon.

2. Dispositif de détection selon la revendication 1, dans lequel le passage capillaire (20) possède une chambre d'essai (26) d'une première circonférence reliée à l'orifice d'admission (22) et un canal en aval d'une seconde circonférence plus petite, monté entre la chambre d'essai (26) et l'orifice de sortie (24).

3. Dispositif de détection selon la revendication 2, dans lequel les moyens de détection (28A-28E) sont disposés dans la chambre d'essai (26).

4. Dispositif de détection selon la revendication 3, dans lequel le pasage capillaire (20) est en forme de S.

5. Dispositif de détection selon la revendication 1, dans lequel les moyens supports (34) relient à rotation la chambre d'étalonnage (40) et la chambre d'echantillon (42) au support.

6. Dispositif de détection selon la revendication 5, dans lequel les moyens supports comprennent un manchon de guidage cylindrique (34) supporté par le support (16), et dans lequel les chambres d'étalonnage et d'échantillon (40, 42) se trouvent à l'intérieur d'un cylindre (36) monté à rotation dans le manchon de guidage cylindrique (34).

7. Dispositif de détection selon la revendication 6, comportant en outre un organe d'étanchéité supérieur (88) pouvant être rompu, recouvrant une extrémité supérieure de la chambre d'étalonnage (40), et des moyens (94, 102, 104) pour rompre l'organe d'étanchéité supérieur (88) pour exposer le fluide d'étalonnage à la pression atmosphérique.

8. Dispositif de détection selon la revendication 7, comportant en outre un bouchon (44) s'adaptant au-dessus d'une extrémité supérieure du cylindre (36).

9. Dispositif de détection selon la revendication 8, dans lequel le bouchon (44) possède des moyens d'aération (98, 100) pour exposer le fluide d'étalonnage et le fluide échantillon à l'intérieur des chambres (40, 42) à la pression atmosphérique.

10. Dispositif de détection selon la revendication 9, dans lequel les moyens d'aération comportent un trou d'aération (98, 100) dans le bouchon (44) disposé au-dessus de chacune des chambres (40, 42).

11. Dispositif de détection selon la revendication 8, dans lequel les moyens (94, 102, 104) pour rompre l'organe d'étanchéité (88) à l'extrémité supérieure sont portés par le bouchon (44).

12. Dispositif de détection selon la revendication 8, dans lequel le cylindre (36) comprend une paroi de séparation verticale (38) pour diviser l'intérieur du cylindre en chambres d'étalonnage et d'échantillon (40, 42).

13. Dispositif de détection selon la revendication 12, dans lequel le bouchon (44) comprend une première bride d'entraînement (94) s'étendant généralement vers le bas depuis une surface intérieure du bouchon pour venir en contact de la paroi de séparation (38) en vue de transmettre une force de rotation depuis le bouchon (44) au cylindre (36) lorsque le bouchon est tourné.

14. Dispositif de détection selon la revendication 13, dans lequel le bouchon (44) comprend en outre une seconde bride d'entraînement (96) espacée de la première bride d'entraînement (94) et s'étendant vers le bas depuis la surface intérieure du bouchon (44) pour venir en contact de la paroi de séparation (38) en vue de transmettre une force de rotation depuis le bouchon (44) au cylindre (36).

15. Dispositif de détection selon la revendication 13, dans lequel les moyens pour rompre l'organe d'étanchéité supérieur (88) comprennent la première bride d'entraînement (94).

16. Dispositif de détection selon la revendication 15, dans lequel les moyens pour rompre l'organe d'étanchéité supérieur (88) comprennent en outre une pluralité de goussets (102, 104) reliés à la première bride d'entraînement (94), les goussets et la première bride d'entraînement formant une lame dirigée vers le bas en vue de rompre l'organe d'étanchéité supérieur (88).

17. Dispositif de détection selon la revendication 1, comportant en outre des moyens (72A, 86) pour limiter la rotation du cylindre (36) depuis la position de départ dans une direction vers la position d'essai d'étalonnage.

18. Dispositif de détection selon la revendication 7, dans lequel le cylindre (36) possède une paroi de séparation verticale (38) pour diviser l'intérieur du cylindre en chambres d'étalonnage et d'échantillon (40, 42) et possède un fond en forme générale de V qui comprend une paire de parois inclinées (112, 114) qui sont généralement perpendiculaires à la paroi de séparation (38).

19. Dispositif de détection selon la revendication 1, dans lequel les moyens pour définir une position de départ, une position d'essai d'étalonnage et une position d'essai d'échantillon comportent une pluralité d'ergots circonférentiellement espacés (82, 84, 86).

20. Procédé de détermination de la concentration d'une substance chimique choisie dans un fluide échantillon en utilisant un dispositif de détection comprenant un réservoir (36) à chambres multiples possédant une chambre d'étalonnage scellée (40) qui contient un fluide d'étalonnage et une chambre d'échantillon (42), un passage capillaire (20) possédant un orifice d'admission (22), un orifice de sortie (24), une chambre d'essai (26) reliée à l'orifice d'admission (22), et un capteur sélectif de substance (28A-28E) qui présente une caractéristique mesurable prédéterminée qui est une fonction de la concentration de la substance chimique choisie, procédé comportant les étapes consistant à:

placer le fluide échantillon dans la chambre d'échantillon (42);

déplacer le réservoir (36) d'une position de départ dans laquelle ni la chambre d'étalonnage (40) ni la chambre d'échantillon (42) n'est reliée à l'orifice d'admission (22), dans une première position d'essai dans laquelle un premier organe d'étanchéité (126) est cassé de sorte que l'une (40) des chambres d'étalonnage et d'échantillon est reliée à l'orifice d'admission (22) pour provoquer l'aspiration du fluide depuis cette chambre (40) dans la chambre d'essai (26);

mesurer la caractéristique mesurable prédéterminée tandis que le fluide de la première chambre (40) se trouve dans la chambre d'essai (26);

déplacer le réservoir (36) de la première position d'essai dans une seconde position d'essai dans laquelle un second organe d'étanchéité (128) est cassé de sorte que l'autre (42) des chambres d'étalonnage et d'échantillon est reliée à l'orifice d'admission (22) pour provoquer l'aspiration par capillarité du fluide de l'autre chambre (42) dans la chambre d'essai (26) et purger le fluide de la première chambre (40) de la chambre d'essai (26) dans un canal en aval;

mesurer la caractéristique mesurable prédéterminée tandis que le fluide de l'autre chambre (42) se trouve dans la chambre d'essai (26); et

en tirer une concentration de la substance chimique choisie dans le fluide échantillon en fonction de la caractéristique mesurable déterminée telle que mesurée lorsque le fluide d'étalonnage était dans la chambre d'essai (26) et lorsque le fluide d'échantillon était dans la chambre d'es-sai (26).

Fig.1

Fig.2

EP 0 179 129 B1

Fig.3A

Fig.4A

Fig.3B

Fig.4B

Fig.3C

Fig.4C

2

Fig.5A

Fig.5B

Fig.5C

*Fig.7A*

84
80
36
82
126
86
108
112
128
124
122
130
116
118

*Fig.7B*
46
36
80
86
110
82
128
114
126
116
122
130
118
124

44
46
102
92
98
90
104
100
94
96

*Fig.6*

Fig. 8